(19) Europäisches Patentamt
European Patent Office
Office européen des brevets

(11) **EP 3 001 588 A1**

(12) **EUROPEAN PATENT APPLICATION**

(43) Date of publication:
**30.03.2016 Bulletin 2016/13**

(51) Int Cl.:
*H04H 20/26* (2008.01)    *H04H 60/51* (2008.01)

(21) Application number: **15186198.6**

(22) Date of filing: **22.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.09.2014 US 201414495530**

(71) Applicant: **NXP B.V.**
**5656 AG Eindhoven (NL)**

(72) Inventors:
• **Dominic, Pushparaj**
  **Redhill, Surrey RH1 1SH (GB)**
• **Thomas, Bijo**
  **Redhill, Surrey RH1 1SH (GB)**

(74) Representative: **Terblanche, Candice Jane**
**NXP Semiconductors**
**Intellectual Property and Licensing**
**Red Central**
**60 High Street**
**Redhill, Surrey RH1 1SH (GB)**

(54) **COMMUNICATIONS SYSTEM**

(57)    One example discloses a communications system, having: a communications unit, including circuits for processing data signal frequencies; a geographic location unit having a first location signal input, triggered at a first geographic location, and a second location signal input, triggered at a second geographic location; a geographic frequency database including: a first subset of data signal frequencies which can be validated by the communications unit at the first location; and a second subset of data signal frequencies which can be validated by the communications unit at the second location; a frequency scan control unit electrically coupled to the communications unit, the geographic location unit and the geographic frequency database; and wherein the scan control unit configures the communications unit to process the first subset of communication frequencies in response to the first location trigger and to process the second subset of communication frequencies in response to the second location trigger.

FIG. 7

**Description**

Aspects of various example embodiments are directed to systems, methods, apparatuses, devices, articles of manufacture and computer readable mediums involving communications systems.

Digital radio communications devices use frequency scanning to identify decodable stations and programming. One example system scans an entire Digital Radio Mondiale (DRM) frequency spectrum or the spectrum of frequencies. The scanning process, however, can result in a substantial time delay before a data signal with sufficient strength can be validated and thereby made usable for downstream processing and relatively error-free information transfer.

The radio band used in digital radio transmissions such as DRM, Digital Audio Broadcasting (DAB), and HD span a default grid of frequencies, which can be quite numerous. For example, DRM occupies a spectrum capable of carrying over 2,500 services (over 25MHz of spectrum (150kHz to 27MHz) at 10kHz per channel). Frequency scanning and tuning across such an entire DRM spectrum requires a communications receiver to pause for a significant fraction of a second to decode sufficient signal to establish the availability and quality of a service at each frequency slot. For 2500 possible channels, this amount to a major time delay. The process of scanning the entire spectrum, automatically or otherwise, potentially several times per day, would in some example embodiments be a time consuming process.

Example embodiments which simplify digital radio communications device frequency scanning are now discussed. In one example embodiment, a number of frequencies used for the frequency scan process is reduced, shortening a time delay before a data signal with sufficient strength can be used for later downstream processing. In such an embodiment, a location of the digital radio communications device is used to determine a subset of frequencies which the communications device can receive and decode. By processing the subset of frequencies instead of an entire digital radio band, the time delay for identifying a sufficiently strong station is reduced, and hence the frequency scanning is made simpler, thereby reducing communication system complexity and reducing a time required to validate a data signal frequency for subsequent audio, video or data processing and/or presentation.

According to another example embodiment, a communications system, comprises: a communications unit, including circuits for processing a set of data signal frequencies; a geographic location unit having a first location signal input, triggered at a first geographic location, and a second location signal input, triggered at a second geographic location; a geographic frequency database including: a first subset of data signal frequencies which can be validated by the communications unit at the first location; and a second subset of data signal frequencies which can be validated by the communications unit at the second location; a frequency scan control unit electrically coupled to the communications unit, the geographic location unit and the geographic frequency database; and wherein the scan control unit configures the communications unit to process the first subset of communication frequencies in response to the first location trigger and to process the second subset of communication frequencies in response to the second location trigger.

A data signal frequency may be validated when the communication unit locks-on or synchronizes-on the data signal. The data signal frequencies may be received from a set of transmitters along a geographic travel route, each transmitter having a broadcast range, and the first and second geographic locations are within the broadcast range of a first and second one of the transmitters. The geographic location unit may include a geographic travel route having a present location at a current time and a future location at an expected time; and the scan control unit, at the present time, may configure the communications unit both, to validate a present subset of communication frequencies, and cache a future subset of communication frequencies to be validated at the expected time. The scan control unit may configure the communications unit to process only the first subset of communication frequencies in response to the first location trigger. The communications unit cannot validate the first subset of communication frequencies in response to the second location trigger.

The communications unit may validate both the first and second subsets of communication frequencies in response to a third geographic location trigger, and the scan control unit may configure the communications unit to process both the first and second subsets of communication frequencies. The set of data signal frequencies may correspond to a default grid of all possible frequencies within an ITU Region. The communications system may be at least one of: a broadcast radio receiver; a satellite radio receiver; a mobile communications device; or a smartphone. The communications unit may be at least one of: a receiver; a transceiver; a Digital Radio Mondiale (DRM) receiver; a Digital Audio Broadcasting (DAB) receiver, an AM receiver; or an FM receiver. The geographic location unit may be a GPS receiver. In another example embodiment, an article of manufacture comprises at least one non-transitory, tangible machine readable storage medium containing executable machine instructions for communications, which comprise: receiving a first location signal at a first geographic location, and a second location signal at a second geographic location; validating a first subset of a set of data signal frequencies upon receiving the first location signal; and validating a second subset within the set of data signal frequencies upon receiving the second location signal.

The instructions may further comprise validating may include locking-on or synchronizing-on the subset data signal with a baseband communications unit. The instructions may further comprise downloading the second subset of data signals from a remote source upon receiving the second location signal. The instructions may comprise deleting the first subset of data signals from the article of manufacture upon receiving the second location signal.

In another example, a communications method comprises receiving a first location signal at a first geographic location, and a second location signal at a second geographic location; validating a first subset of a set of data signal frequencies upon receiving the first location signal; and validating a second subset within the set of data signal frequencies upon receiving the second location signal.

Validating may include locking-on or synchronizing-on the subset data signal with a baseband communications unit. Downloading the second subset of data signals from a remote source may be carried out upon receiving the second location signal. The method may further comprise deleting the first subset of data signals from the article of manufacture upon receiving the second location signal.

The above discussion/summary is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings, in which:

## BRIEF DESCRIPTION OF THE DRAWINGS

Figure 1 is an example communications system.
Figure 2 is an example set of communications system frequency bands.
Figure 3 is an example first set of geographical coverage areas presented to the communications system.
Figure 4 is an example geographic frequency database data structure.
Figure 5 is an example second set of geographical coverage areas presented to the communications system.
Figure 6 is an example communications system proximity to geographical coverage areas data structure.
Figure 7 is a first example flowchart for implementing a communications system.
Figure 8 is a second example flowchart for implementing a communications system.
Figure 9 is an example system for hosting instructions for enabling a communications system.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

## DETAILED DESCRIPTION

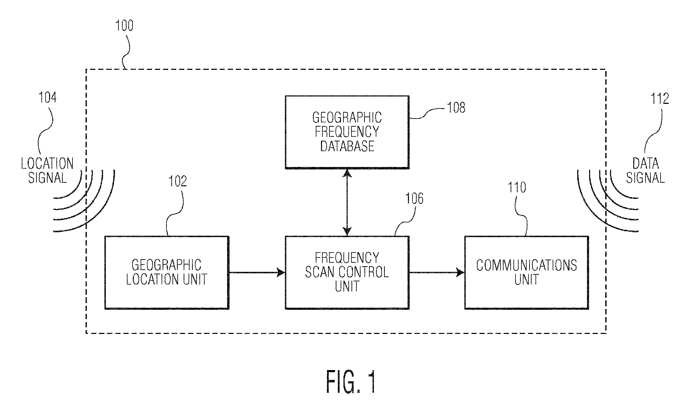

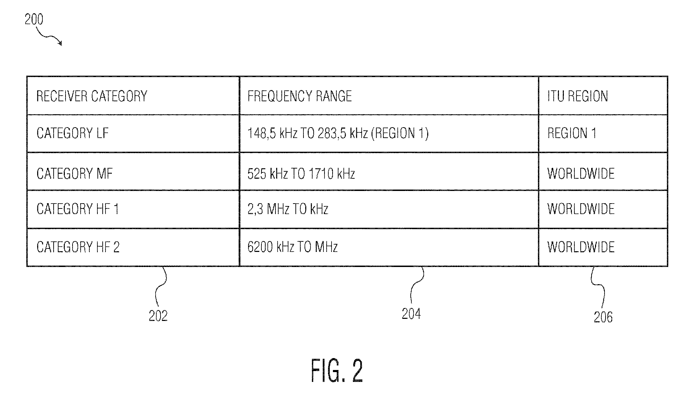

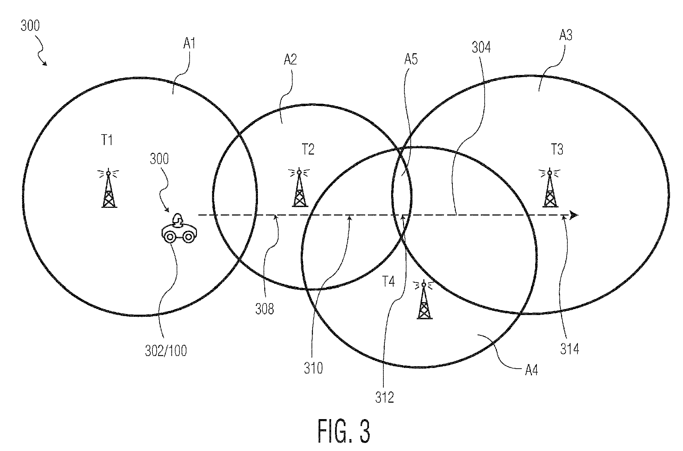

Figure 1 is one example of a communications system 100. The communications system 100 includes a geographic location unit 102 which receives a location signal 104, a frequency scan control unit 106, a geographic frequency database 108 and a communications unit 110 capable of receiving a set of data signal frequencies 112. In one example embodiment, the communications system 100 is at least one of: a broadcast radio receiver; a satellite radio receiver; a mobile communications device; a smartphone; or is embedded in a vehicle (e.g. Figure 3 element 302). In one example embodiment, the set of data signal frequencies 112 correspond to a default grid of all possible frequencies within an ITU Region (e.g. see Figure 2).

The communications unit 110 includes circuits for processing the set of data signal frequencies 112. The communications unit 110 in various example embodiments functions as a receiver or a transceiver. The communications unit 110 instructed to scan a selected set of frequencies for further baseband processing. In various example embodiments, the communications unit 110 can be either: a receiver; a transceiver; a Digital Radio Mondiale (DRM) receiver; a Digital Audio Broadcasting (DAB) receiver, an AM receiver; or an FM receiver. Some key functions of the communications unit 110 include: channel decoding, source decoding, and radio control functions to interface with tuners and application processors. The communications unit 110 uses the identified frequencies to carry out the actual frequency scanning process and subsequent downstream/baseband processing tasks such as channel encoding/decoding, source decoding and presentation (e.g. sound or visual output).

The geographic location unit 102 has a first location signal input, triggered at a first geographic location, and a second location signal input, triggered at a second geographic location. In one example embodiment, the geographic location unit 102 is a GPS receiver. The geographic (e.g. GPS) location unit 102 determines the system's 100 geographic position and passes the position information to the scan control unit 106. The geographic location unit 102 provides position information such as longitude and latitude, such as can be provided by a satellite navigation system. The geographic location unit 102 is used to determine the geographic location of the communications unit 110 such that the coverage regions which encompass the communications unit's 110 current and future locations can be identified.

The geographic frequency database 108 includes, a first subset of data signal frequencies 112 which can be validated by the communications unit 110 at the first location, and a second subset of data signal frequencies 112 which can be validated by the communications unit 110 at the second location. In one example embodiment, a data signal frequency 112 is validated when the communication unit 110 locks-on or synchronizes-on the data signal 112.

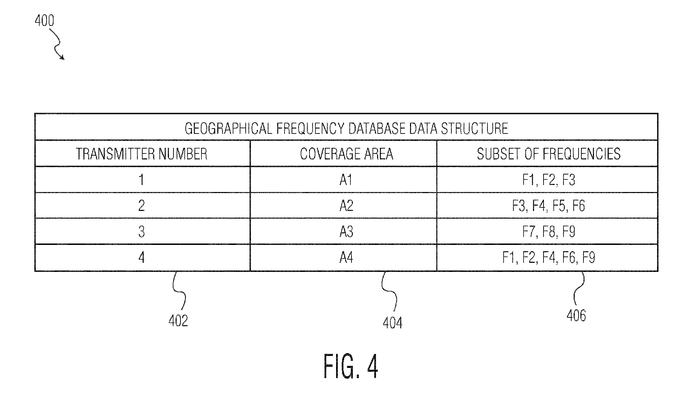

The geographic frequency database 108 (e.g see Figure 4) stores information about radio signal reception areas and the corresponding frequencies used for digital radio transmission which are to be scanned by the communications unit 110. Such a database is herein also defined as a dynamically configurable frequency scan grid. The frequency database 108 can also store transmission frequency grid information provided by ITU for various regions. In an example embodiment, the frequency database 108 if stored in the memory unit embedded in the communications unit 110.

The frequency scan control unit 106 is electrically coupled to the communications unit 110, the geographic location unit 102 and the geographic frequency database 108. The scan control unit 106 configures the communications unit 110 to process the first subset of communication frequencies in response to the first location trigger and to process the second subset of communication frequencies in response to the second location trigger. Thus, based on the location of the communications unit 110, the frequency scan control unit 106 uses frequency coverage area information stored in the geographic frequency database 108 to identify the relevant subset of frequencies for the communications unit 110 to search for and process.

The frequency scan control unit 106 can be implemented as a dedicated hardware unit or as software in a processor unit. According to an embodiment of the present invention, the frequency scan control unit 106 can be implemented as part of the baseband processor in communications unit 110.

In one example embodiment, the frequency scan and tuning is limited to only subset of the frequency spectrum, thereby simplifying the communications unit 110 design and speeding up the reception process. In another example embodiment, the scan control unit 106 configures the communications unit 110 to process only the first subset of communication frequencies in response to the first location trigger. In yet another example embodiment, the communications unit 110 cannot validate the first subset of communication frequencies in response to the second location trigger. While, in other example embodiments, the communications unit 110 can validate both the first and second subsets of communication frequencies in response to a third geographic location trigger, and the scan control unit 106 configures the communications unit 110 to process both the first and second subsets of communication frequencies.

Figure 2 is an example set 200 of communications system 100 frequency bands relevant to DRM and ARM receivers. This particular set 200 includes a receiver category 202, a frequency range 204 and an ITU region 206. The set of communications system 100 frequency bands is also known as a "default grid". The default grid is herein defined to include an entire possible set of digital channels within one or more ITU Regions 206. Similar scan grid tables exists for other standards such as DAB and FM for the frequency ranges used in those standards.

For example, for communications units 110 capable of decoding receiver category 202 "LF" each digital channel in the frequency range 204 from 148.5kHz through 283.5 kHz could be a source of a digital signal that could be validated somewhere in ITU Region 1. However, depending upon the communications system's 100 location, only a subset of the possible set of digital channels may actually have a signal strong enough to be validated.

While a set of Digital Radio Mondiale (DRM) frequencies are shown, in other embodiments the communication system frequency bands include: Digital Audio Broadcasting (DAB) frequencies, AM frequencies, and FM frequencies. In one example embodiment, the communication system scans the entire DRM band, searching for all available DRM broadcasts.

A broadcast data signal 112 frequency is validated when a channel decoder in the communication unit 110 is able to lock-on (e.g. synchronize-on) the data signal 112. The scan starts at a start frequency and the scan range is limited by an end frequency.

The DRM communications unit 110 usually allow reception of DRM transmissions in 3 kHz steps in the LF band, in 1 kHz steps in the MF band and 5 kHz steps in the HF bands. The start and end frequencies and the step sizes control the scan algorithm. The scan frequency information is stored in the communications unit 110 as grid tables. The grid tables used for scanning are either pre-defined based on the ITU recommendations for each region. In addition to this, user application defined grid tables can also be used.

Example embodiments which scan all or most of the frequency grid table frequencies for the entire DRM frequency spectrum take more time and require a more complex communications unit 110 than example embodiments which restrict scanning to a subset of the frequency grid table frequencies. Example embodiments which restrict the frequency scanning to only those frequencies which are capable of being validated by the communications unit 110 tend to be faster.

Figure 3 is an example 300 first set of geographical radio transmitter coverage areas presented to the communications system 100. In this example, the communications system 100 is embedded in a vehicle 302 and the data signal frequencies 112 are transmitted from a set of transmitters (T1, T2, T3, and T4) having corresponding broadcast range coverage areas (A1, A2, A3, and A5). The vehicle 302 travels along a geographic travel route 304.

In one example embodiment, the geographic location unit 102 determines the vehicle's 302 location in real-time, while in another example embodiment, the geographic location unit 102 a priori knows the travel route 304 and not only determines the vehicle's 302 current location 306 in real-time but also predicts a set of future locations 308, 310, 312, 314 at various expected times.

The scan control unit 106 can be programmed in a variety of ways that loads and deletes various combinations and subsets of the data signal frequencies 112 which correspond to the current and future vehicle 302 locations. For example, at a present/current time, the scan control unit 106 can configure the communications unit 110 both, to validate a present subset of communication frequencies, and cache a future subset of communication frequencies to be validated at a future/expected time.

As shown in Figure 3, while the vehicle 302 is in the coverage A1, is tuned to transmitter T1 from which the system 100 can receive and validate the transmitted audio or other data. When the vehicle 302 is in the area A1, only signals from the transmitter T1 have sufficient signal strength for reception. Hence in one example the frequency scanning is done using only the frequency of transmitter T1. As the vehicle 302 travels, as indicated by the arrow direction, beyond reception area A1, it passes through coverage areas of transmitters T2, T3, T4 and sometimes a combination of them. For example, when communications unit 110 is in the area A5 (i.e. location 312), there is signal coverage by three transmitters T2, T3 and T4. Hence the frequency scanning would include all three transmitter's relevant/valid frequency transmissions.

The geographic frequency database 108 can be populated with the relevant/valid frequencies broadcast by each transmitter either *apriori* or dynamically upon first entering a geographical region.

Figure 4 is an example geographic frequency database 108 data structure 400. The data structure 400 includes a transmitter number/identifier 402, a coverage area 404 and a subset of frequencies 406. The coverage area A1,A2, etc represents a geographic area corresponding to transmission signal coverage above a predetermined minimum signal strength based on information published by each broadcaster and a detection sensitivity of the communications unit 110.

The coverage areas can be of any shape and may or may not be centered upon the transmitter's broadcast location. If the coverage area is a circle, the signal strength (power) received from the transmitter at any location is inversely proportional to the square of a distance from the transmitter to a receiver. If the coverage area assumes a complex shape, for example an ellipse, then an eliptical coverage region having a coverage radius = major axis of ellipse/2 can be defined.

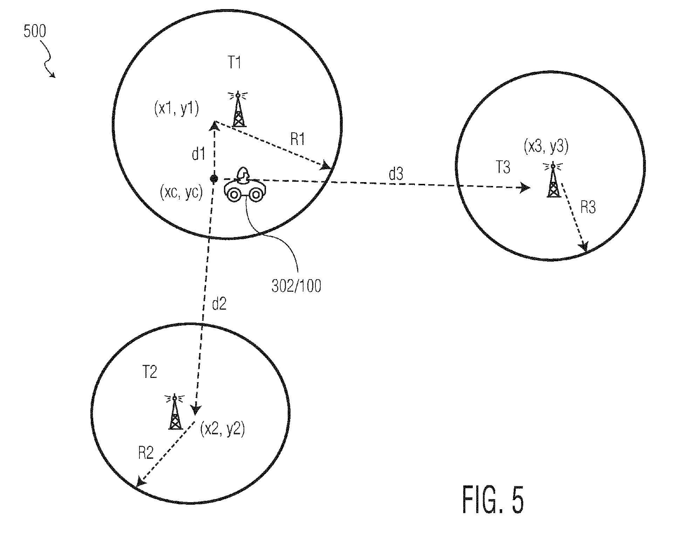

Figure 5 is an example second set of geographical coverage areas 500 presented to the communications system 100. Figure 5 shows three transmitters T1, T2, and T3 located at geographical co-ordinates (x1,y1), (x2,y2) and (x3,y3). The coverage area radius for transmitters T1, T2, and T3 is respectively R1, R2 and R3. The vehicle 302 (i.e. communications system 100) is shown as located in the R1 coverage area of transmitter T1. The current location of the communications system 100 is (xc,yc). A distance d1 between transmitter T1 and the vehicle 302 is calculated according to the following equation *(sqrt == square root):*

$$d1 = sqrt \left( (x1\text{-}xc)^2 + (y1\text{-}yc)^2 \right)$$

Using the equation above, the vehicle's 302 proximity to T2 and T3 can be calculated respectively as d2 and d3. If the value of (d1- R1) is negative, then the vehicle 302 is located within the coverage area of T1, and if the value of (d1 - R1) is positive, then the vehicle 302 is not located within the coverage area of T1. Calculations for (d2 - R2) and (d3 - R3) are performed as well. If the distance measure is negative (-) with respect to a particular coverage area, then the vehicle 302/100 is in that coverage area and the frequencies of that coverage area's transmitter are available for scanning and validation. If the value of distance measure is positive (+), the vehicle 302/100 is outside the coverage area of that particular transmitter and the frequencies of that coverage area's transmitter most likely cannot be validated and thus need not be scanned. As the vehicle 302/100 moves to a new location, the geographical co-ordinates and distance between the vehicle 302/100 and transmitters T1, T2 and T3 are recalculated.

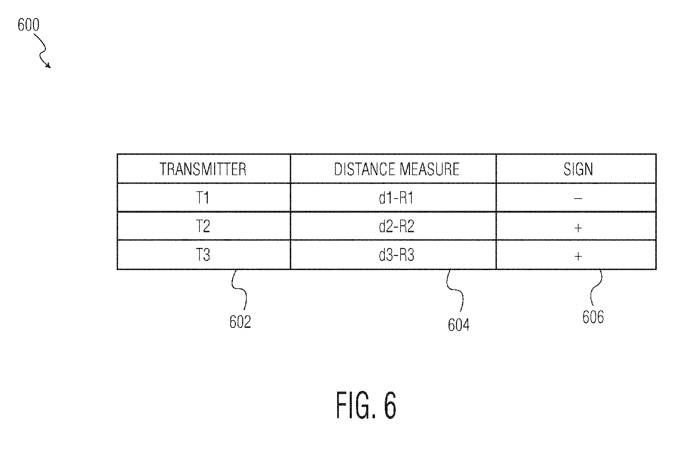

Figure 6 is an example communications system 100 proximity to geographical coverage areas (R1, R2 and R3) data structure 600. The data structure 600 includes a transmitter 602 field, a distance 604 field, and a sign 606 field. The transmitter 602 field stores a set of transmitters within a predetermined distance from the vehicle 302/100. The distance 604 field stores a calculated distance between the vehicle 302/100 and the transmitters. The sign 606 field stores the sign of each calculated distance.

In one example embodiment, a number of transmitters whose distance measures need to be calculated is limited to a particular region, perhaps based on a predicted distance that the vehicle 302/100 can travel in one day. For example, the communications system 100 may be programmed to calculate distances to transmitters within a 1000 km range from the vehicle's 302/100 location at the beginning of a day. This regional list may be updated from time to time even if the vehicle 302/100 stays within the region due to infrastructure and outages (i.e. new transmitters brought online, weather induced transmitter failures, etc.).

In another example embodiment, a distance from a location where the data structure 600 was earlier populated to the present location (dc') is calculated and those stations whose distance Measure-dc' is negative are considered. In example embodiments where the vehicle 302/100 travels along a recurrent route (e.g. from Home to office and then back home) multiple instances of the data structure 600 can be stored with reference to a set of waypoints along the route, and thus the data structures 600 can be reused and not recalculated.

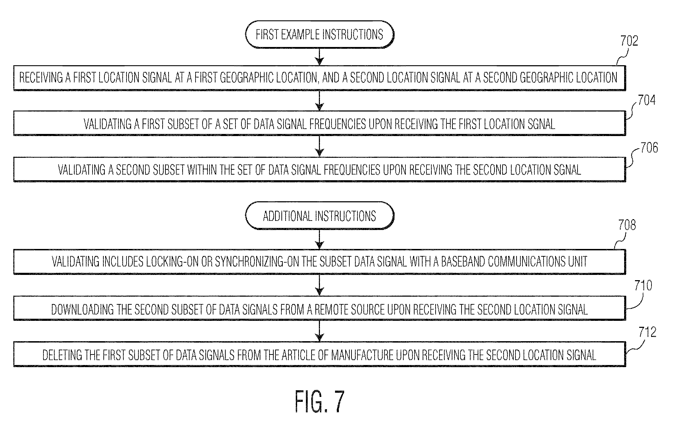

Figure 7 is a first example list of instructions for implementing a communications system. A first example instruction set begins in block 702, by receiving a first location signal at a first geographic location, and a second location signal at a second geographic location. Next, in block 704, validating a first subset of a set of data signal frequencies 112 upon receiving the first location signal. Then in block 706, validating a second subset within the set of data signal frequencies 112 upon receiving the second location signal.

The instructions can be augmented with one or more of the following additional instruction blocks, presented in no particular order. For example, in block 708, validating includes locking-on or synchronizing-on the subset data signal 112 with a baseband communications unit 110. Or in block 710, downloading the second subset of data signals 112 from a remote source upon receiving the second location signal. Also in block 712, deleting the first subset of data signals 112 from the article of manufacture upon receiving the second location signal.

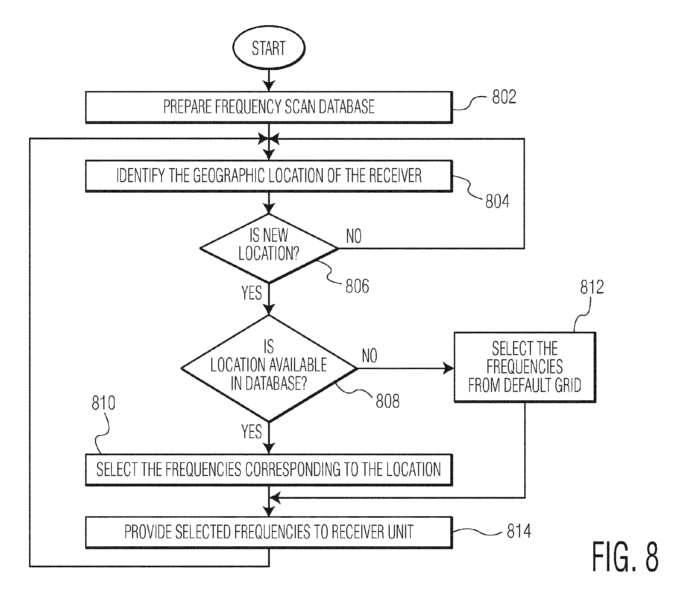

Figure 8 is a second example flowchart for implementing a communications system 100. The geographic frequency database 108 is initialized in 802. The initialization process includes preparing the geographic frequency database 108 as in Figure 4. Also the default frequency grids, such as the ones provided by ITU corresponding various geographical areas in Figure 2, are stored as part of 802. The geographic location of the communications unit 110 is identified in 804. This is done based on the location information available from the geographic location unit 102. The received location is checked in 806 to find out if it is a new location compared to the previous received location from the geographic location unit 102. If the location information is the same as the previous location, it means that the communications unit 110 location has not changed and hence the location information has been received in 804. If the received location is new, the database is checked in 808 to verify if the entry corresponding geographical area is present in the database. If the geographical area corresponding to this location is present in the database, the corresponding frequencies are selected in 810. If not present, the default frequencies are selected in 812. In 814, the selected frequencies are provided to the communications unit 110 for further processing such as frequency scanning for reception.

While these instructions have been presented in example orders of execution, other orderings are also possible.

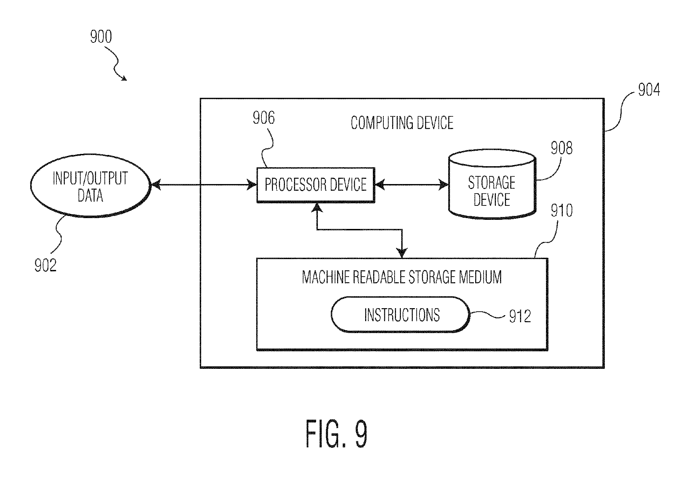

Figure 9 is an example system 900 for hosting instructions for enabling a communications system 100. The system 900 shows an input/output data 902 interface with an electronic apparatus 904. The electronic apparatus 904 includes a processor 906, a storage device 908, and a machine-readable storage medium 910. The machine-readable storage medium 910 includes instructions 912 which control how the processor 906 receives input data 902 and transforms the input data into output data 902, using data within the storage device 908. Example instructions 912 stored in the machine-readable storage medium 910 are discussed elsewhere in this specification. The machine-readable storage medium in an alternate example embodiment is a computer-readable storage medium.

In one example, the instructions 912 stored in the machine-readable storage medium 910 include those shown in Figures 7 or 8.

The processor (such as a central processing unit, CPU, microprocessor, application-specific integrated circuit (ASIC), etc.) controls the overall operation of the storage device (such as random access memory (RAM) for temporary data storage, read only memory (ROM) for permanent data storage, firmware, flash memory, external and internal hard-disk drives, and the like). The processor device communicates with the storage device and non-transient machine-readable storage medium using a bus and performs operations and tasks that implement one or more blocks stored in the machine-readable storage medium. The machine-readable storage medium in an alternate example embodiment is a computer-readable storage medium.

The blocks which comprise the instructions and/or flowcharts in the above Figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more blocks or steps discussed herein are automated. The terms automated or automatically (and like variations thereof) mean controlled operation of an apparatus, system, and/or process using computers and/or mechanical/electrical devices without the necessity of human intervention, observation, effort and/or decision.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A communications system, comprises:

a communications unit, including circuits for processing a set of data signal frequencies;
a geographic location unit having a first location signal input, triggered at a first geographic location, and a second location signal input, triggered at a second geographic location;
a geographic frequency database including:

a first subset of data signal frequencies which can be validated by the communications unit at the first location; and
a second subset of data signal frequencies which can be validated by the communications unit at the second location;

a frequency scan control unit electrically coupled to the communications unit, the geographic location unit and the geographic frequency database; and
wherein the scan control unit configures the communications unit to process the first subset of communication frequencies in response to the first location trigger and to process the second subset of communication frequencies in response to the second location trigger.

2. The system of claim 1:

wherein a data signal frequency is validated when the communication unit locks-on or synchronizes-on the data signal.

3. The system of claim 1:

wherein the data signal frequencies are received from a set of transmitters along a geographic travel route, each transmitter having a broadcast range, and the first and second geographic locations are within the broadcast range of a first and second one of the transmitters.

4. The system of claim 1:

wherein the geographic location unit includes a geographic travel route having a present location at a current time and a future location at an expected time; and
wherein the scan control unit, at the present time, configures the communications unit both, to validate a present subset of communication frequencies, and cache a future subset of communication frequencies to be validated at the expected time.

5. The system of claim 1:

wherein the scan control unit configures the communications unit to process only the first subset of communication frequencies in response to the first location trigger.

6. The system of claim 1:

wherein the communications unit can validate both the first and second subsets of communication frequencies in response to a third geographic location trigger, and the scan control unit configures the communications unit to process both the first and second subsets of communication frequencies.

**7.** The system of claim 1:

wherein the set of data signal frequencies correspond to a default grid of all possible frequencies within an ITU Region.

**8.** An article of manufacture comprises at least one non-transitory, tangible machine readable storage medium containing executable machine instructions for communications, which comprise:

receiving a first location signal at a first geographic location, and a second location signal at a second geographic location;
validating a first subset of a set of data signal frequencies upon receiving the first location signal; and
validating a second subset within the set of data signal frequencies upon receiving the second location signal.

**9.** The article of claim 8:

wherein validating includes locking-on or synchronizing-on the subset data signal with a baseband communications unit.

**10.** The article of claim 8:

downloading the second subset of data signals from a remote source upon receiving the second location signal.

**11.** The article of claim 8:

deleting the first subset of data signals from the article of manufacture upon receiving the second location signal.

**12.** A communications method, comprising:

receiving a first location signal at a first geographic location, and a second location signal at a second geographic location;
validating a first subset of a set of data signal frequencies upon receiving the first location signal; and
validating a second subset within the set of data signal frequencies upon receiving the second location signal.

**13.** The method of claim 12:

wherein validating includes locking-on or synchronizing-on the subset data signal with a baseband communications unit.

**14.** The method of claim 12:

downloading the second subset of data signals from a remote source upon receiving the second location signal.

**15.** The method of claim 12:

deleting the first subset of data signals from the article of manufacture upon receiving the second location signal.

FIG. 1

200

| RECEIVER CATEGORY | FREQUENCY RANGE | ITU REGION |
|---|---|---|
| CATEGORY LF | 148,5 kHz TO 283,5 kHz (REGION 1) | REGION 1 |
| CATEGORY MF | 525 kHz TO 1710 kHz | WORLDWIDE |
| CATEGORY HF 1 | 2,3 MHz TO kHz | WORLDWIDE |
| CATEGORY HF 2 | 6200 kHz TO MHz | WORLDWIDE |

202                                      204                                      206

FIG. 2

FIG. 3

400

| GEOGRAPHICAL FREQUENCY DATABASE DATA STRUCTURE | | |
|---|---|---|
| TRANSMITTER NUMBER | COVERAGE AREA | SUBSET OF FREQUENCIES |
| 1 | A1 | F1, F2, F3 |
| 2 | A2 | F3, F4, F5, F6 |
| 3 | A3 | F7, F8, F9 |
| 4 | A4 | F1, F2, F4, F6, F9 |

402                              404                              406

FIG. 4

500

T1

(x1, y1)

R1

d1

(xc, yc)

d3

T3

(x3, y3)

R3

302/100

d2

T2

(x2, y2)

R2

FIG. 5

600

| TRANSMITTER | DISTANCE MEASURE | SIGN |
|:---:|:---:|:---:|
| T1 | d1-R1 | − |
| T2 | d2-R2 | + |
| T3 | d3-R3 | + |

602      604      606

FIG. 6

FIRST EXAMPLE INSTRUCTIONS

702

RECEIVING A FIRST LOCATION SIGNAL AT A FIRST GEOGRAPHIC LOCATION, AND A SECOND LOCATION SIGNAL AT A SECOND GEOGRAPHIC LOCATION

704

VALIDATING A FIRST SUBSET OF A SET OF DATA SIGNAL FREQUENCIES UPON RECEIVING THE FIRST LOCATION SGNAL

706

VALIDATING A SECOND SUBSET WITHIN THE SET OF DATA SIGNAL FREQUENCIES UPON RECEIVING THE SECOND LOCATION SGNAL

ADDITIONAL INSTRUCTIONS

708

VALIDATING INCLUDES LOCKING-ON OR SYNCHRONIZING-ON THE SUBSET DATA SIGNAL WITH A BASEBAND COMMUNICATIONS UNIT

710

DOWNLOADING THE SECOND SUBSET OF DATA SIGNALS FROM A REMOTE SOURCE UPON RECEIVING THE SECOND LOCATION SIGNAL

712

DELETING THE FIRST SUBSET OF DATA SIGNALS FROM THE ARTICLE OF MANUFACTURE UPON RECEIVING THE SECOND LOCATION SIGNAL

FIG. 7

START

PREPARE FREQUENCY SCAN DATABASE — 802

IDENTIFY THE GEOGRAPHIC LOCATION OF THE RECEIVER — 804

IS NEW
LOCATION? — NO

806

YES

IS
LOCATION AVAILABLE
IN DATABASE? — NO → SELECT THE
FREQUENCIES
FROM DEFAULT GRID — 812

808

810

YES

SELECT THE FREQUENCIES CORRESPONDING TO THE LOCATION

PROVIDE SELECTED FREQUENCIES TO RECEIVER UNIT — 814

FIG. 8

900

904

906          COMPUTING DEVICE

908

INPUT/OUTPUT
DATA

PROCESSOR DEVICE          STORAGE
DEVICE

910

902

MACHINE READABLE STORAGE MEDIUM

INSTRUCTIONS          912

FIG. 9

Europäisches
Patentamt

European
Patent Office

Office européen
des brevets

**EUROPEAN SEARCH REPORT**

Application Number

EP 15 18 6198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 659 711 A1 (HARMAN BECKER AUTOMOTIVE SYS [DE]) 24 May 2006 (2006-05-24) <br> * paragraphs [0009] - [0010], [0013], [0017], [0023], [0031] - [0033], [0035], [0037], [0039] - [0041], [0044] - [0045], [0048], [0063]; claim 4 * <br> * figures 1,4 * | 1-15 | INV. <br> H04H20/26 <br> H04H60/51 |
| X | US 2003/032400 A1 (TSUBAKI ARTHUR YUICHI [US] ET AL) 13 February 2003 (2003-02-13) <br><br> * paragraphs [0030], [0032], [0035], [0040] - [0041], [0060] * <br> * figures 2-3 * | 1,8, 10-12, 14,15 | |
| X | US 2010/304702 A1 (ANZURES FREDDY A [US] ET AL) 2 December 2010 (2010-12-02) <br> * paragraphs [0022], [0024] - [0034] * <br> * figure 2 * | 1,7,8, 10,12,14 | |

TECHNICAL FIELDS
SEARCHED      (IPC)

H04H

The present search report has been drawn up for all claims

| Place of search | Date of completion of the search | Examiner |
|---|---|---|
| The Hague | 22 January 2016 | Iovescu, Vladimir |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 6198

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2016

| Patent document cited in search report | | Publication date | Patent family member(s) | | Publication date |
|---|---|---|---|---|---|
| EP 1659711 | A1 | 24-05-2006 | EP | 1659711 A1 | 24-05-2006 |
| | | | US | 2006195239 A1 | 31-08-2006 |
| US 2003032400 | A1 | 13-02-2003 | NONE | | |
| US 2010304702 | A1 | 02-12-2010 | NONE | | |

For more details about this annex : see Official Journal of the European Patent Office, No. 12/82